# EUROPEAN PATENT APPLICATION

(11) **EP 0 999 507 A1**
(43) Date of publication of application: **10.05.2000**
(21) Application number: 98308990.5
(22) Date of filing: 03.11.1998
(51) Int. Cl.: G06F 17/60

(54) **Intelligent communications assistant**

(71) Applicant: BRITISH TELECOMMUNICATIONS public limited company, London EC1A 7AJ (GB)
(72) Inventor: The designation of the inventor has not yet been filed
(74) Representative: Read, Matthew Charles

(57) **Abstract**

A communications organiser (16) for communications such as e-mails and telephone calls made over a network, monitors communications received by a user together with details of the sender, and includes a Baysian net (33) to learn the user's preference for communications from particular senders. A priority for incoming communications on the basis of the learnt preferences is indicated to the user in a window (41).

## Description

The invention relates to improvements in or relating to or for an intelligent assistant device for assisting in the management of information flows for a user.

Modern computers are multifunctional devices which enable a user to process data not only from a local source but also remote sources connected through local area networks and wide area networks such as the internet. The user can send and receive e-mails and generally use the computer as a workstation from which many different day-to-day tasks can be performed.

So-called personal organiser software is available to facilitate management of such day-to-day tasks. For example Microsoft Outlook marketed by Microsoft Corporation, provides a group of program suites accessible through a single window which allows e-mail to be sent, logged, received, making user of address information from a common database. Also, the software includes a diary and scheduling system which allows the user to interrogate diaries of other users on a network, so as to arrange meetings and other appointments. However, with this package and others, the user must make a large number of decisions concerning prioritisation and scheduling of incoming and outgoing data.

In accordance with the present invention, intelligent reasoning computing techniques are used in order to improve functionality.

In accordance with the present invention there is provided a communications organiser for communications made over a network, comprising means for monitoring communications received by a user together with details of the sender, learning means to learn the user's preference for communications from particular senders, and means for indicating to the user a priority for incoming communications on the basis of the learnt preferences.

In order that the invention may be more fully understood, an embodiment thereof will now be described by way of example with reference to the accompanying drawings in which:
Figure 1 is a schematic block diagram of a personal computer configured to act as an intelligent assistant device in accordance with the invention;
Figure 2 is a schematic diagram of software modules used by the device;
Figure 3 is a schematic diagram of the architecture of the co-ordinator shown in Figure 2;
Figure 4 is a schematic flow diagram illustrating execution of a plan determined by the co-ordinator;
Figure 5 is a schematic view of the display provided by diary assistant shown in Figure 2, for making a diary entry;
Figure 6 is a schematic view of the diary display;
Figure 7 is a table of fuzzy rankings for the diary preference "early morning" shown in Figure 5;
Figure 8 is a flow diagram of the diary entry process;
Figure 9 is a block diagram illustrating operation of the e-mail assistant shown in Figure 2;
Figure 10 is a flow diagram illustrating an analysis of the address data on incoming e-mail;
Figure 11 is a block diagram illustrating a process for ranking e-mails according to the importance of their subject field to the user;
Figure 12 is a block diagram of a process for monitoring the computer users past preferences for reading previously received e-mails;
Figure 13 is a flow diagram of a process for monitoring the user's previous history of sending e-mails to particular addresses;
Figure 14 illustrates schematically the display provided by the e-mail assistant, in accordance with the invention;
Figure 15 is a flow diagram for controlling answering of incoming telephone calls;
Figure 16 is a graph of the output of the gaze tracker shown in Figure 1;
Figure 17 is a schematic flow diagram of a process performed by the multi-modal interface shown in Figure 2;
Figure 18 is a schematic diagram of various user states detected by the process shown in Figure 17; and
Figure 19 is a block diagram illustrating a process for ranking the stress level of the computer user.

### Overview

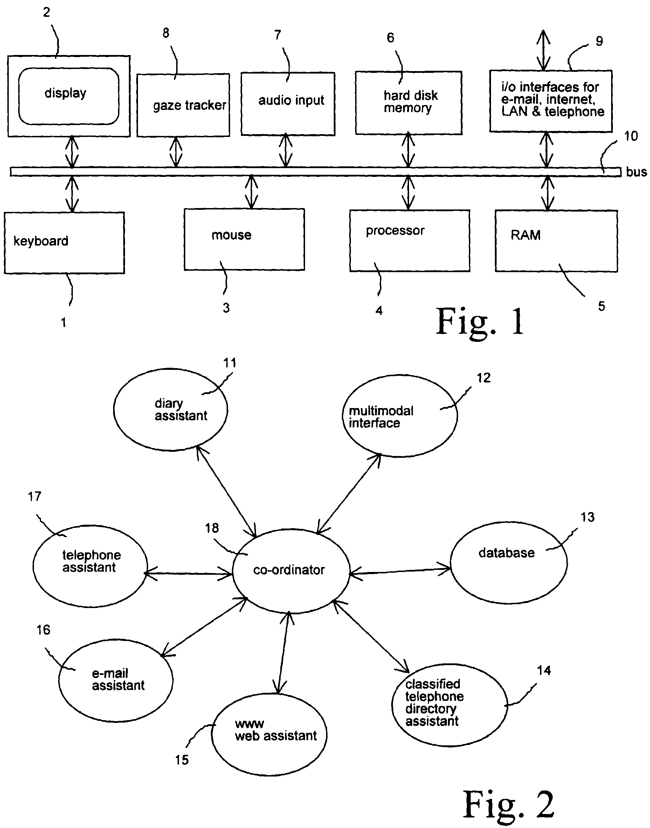

Figure 1 illustrates a generally conventional personal computer workstation that comprises a conventional keyboard 1, a display screen 2 such a CRT or plasma display; a mouse 3, a processor 4, such as a Pentium™ processor, random access memory 5, a hard disc memory 6, an audio input 7 such as a microphone, to detect utterances from the user, a gaze tracker 8 to detect eyeball movement of the user and input/output interfaces 9 to connect the workstation to a local area network (LAN) and wider area networks (WANs) such as the internet, to facilitate data exchange including e-mail messaging with remote users connected to such networks. The interface 9 also allows control of a plain old telephone set (POTS). The various components shown in Figure 1 are interconnected by a common bus 10.

In a conventional manner, the processor 4 runs programs held on hard disc memory 6, making use of RAM 5, under the control of keyboard 1 and mouse 3, together with gaze tracker 8 to provide data on display 2. Audio inputs can be made through the audio input 7 for use by speech recognition software. The arrangement can thus provide the usual database, word-processing and spreadsheet functionality associated with a personal computer by the use of conventional software packages on the hard disc memory 6. Access to a printer (not shown) may be provided.

Additionally, intelligent assistant device software resides on the hard disc memory 6 to provide a personal organiser functionality for the workstation. The overall configuration of the software is shown in Figure 2 and consists of autonomous modules 11-17, the operation of which is co-ordinated by a co-ordinator module 18. All of the modules make use of intelligent reasoning computing techniques in order to provide enhanced assistance to the user.

Module 11 comprises a diary assistant which as will be explained in more detail later, assists the user to make diary entries using fuzzy reasoning techniques.

The module 12 comprises a multi-modal interface to facilitate entry of data in a number of modalities. The module 12 may be configured as described in British Telecom Technical Journal (BTTJ) Vol. 16, No. 3, July 1998, K. C. Tsui et al, "Intelligent Multimodal Systems, pp 134-144. Module 13 comprises a database.

Module 14 comprises an assistant for interrogating and processing data from a classified telephone directory service such as Talking Pages ™ , as described in more detail in British Telecom Technical Journal (BTTJ) Vol. 16, No. 3, July 1998, "YPA - An Intelligent Director Enquiry Assistant" A. De Roeck et al pp 145-155.

Module 15 comprises a web assistant for browsing the World Wide Web. The web assistant develops an interest model of the users interests and preferences, using intelligent reasoning techniques. This is described in more detail in British Telecom Technical Journal (BTTJ) Vol. 16, No. 3, July 1998, "The Personalisation of Agent Services" S. Soltysiak et al pp 110-117.

Module 16 comprises an e-mail assistant the user to determined whether incoming e-mail warrants immediate attention or can be reviewed at a later date, using intelligent reasoning techniques.

Module 17 comprises telephone assistant which determines whether a call should be answered immediately or safely handled at a later date.

The various modules can thus be considered as assistants and will now be described in more detail.

### Co-ordinator

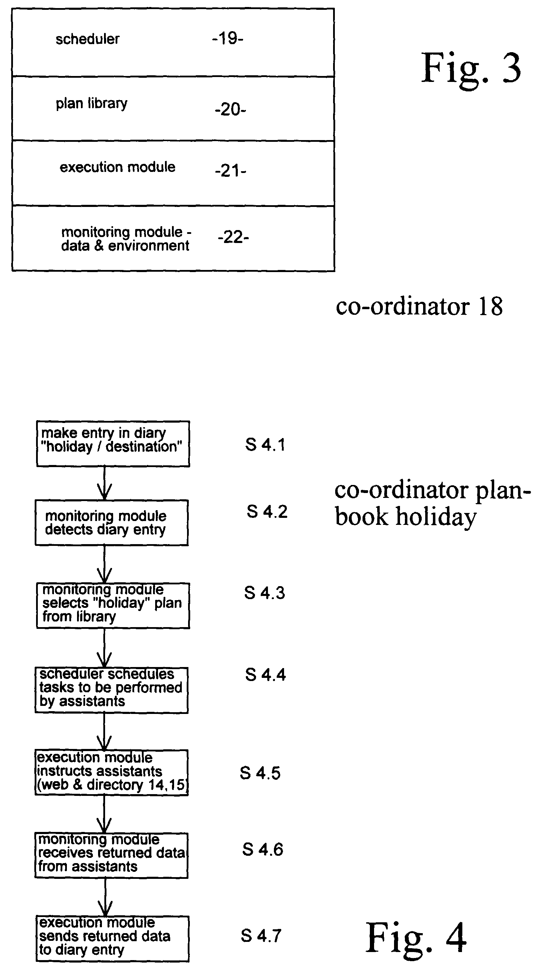

The co-ordinator 18 operates as an intelligent scheduler to allow complex tasks to be carded out using more than one of the modules 11 to 17. The general architecture of the co-ordinator 18 is shown in Figure 3 and comprises a scheduler 19, a plan library 20, an execution module 21 and a monitoring module 22.

The scheduler 19 is operative to schedule the modules 11-17 of Figure 2 to carry out tasks individually, which together make up an overall plan. The modules 11 to 17 are thus instructed by the co-ordinator 18 to operate in a particular sequence to perform instructed tasks which together make up an overall plan.

A number of plans for the scheduler 19 are defined in the plan library 20. The execution module 21 dispatches instructions to the various modules 11 to 17 as specified by the scheduler 19.

The monitoring module 22 monitors the operation of the modules 11 to 17 and detects when instructions are received to perform a particular one of the plans.

The co-ordinator 18 may be implemented in Java™ utilising Java threads so as to enable the various functions to be performed concurrently.

An example of a multi-functional plan carried out by the co-ordinator will now be described with reference to Figure 4. At step S4.1, the user makes an entry using the diary assistant 11 (to be described in more detail later). The user thus makes a diary entry to arrange a holiday at a particular, pre-arranged time in the future. Prior to this diary entry, the co-ordinator 18 will ensure that appropriate data is collated and entered into the diary so that the user can make a decision at the entered time. Thus, at step S4.1, the user is prompted to enter into the diary, an instruction "holiday" which prompts the user for a desired holiday destination.

The monitoring module 22 of the co-ordinator 18, detects the entry of the holiday diarisation carried out at step S4.1. The detection is shown at step S4.2. Having detected that a holiday is to be arranged, the monitoring module selects at step S4.3 a "holiday" plan from the plan library 20 shown in Figure 3. The plan consists of a number of steps to be carried out by the various assistants in order to collate data for the user relevant to arranging a holiday.

At step S4.4, the scheduler 19 schedules a list of tasks to be performed at various times by the assistants in order to obtain the data relevant to arranging the holiday. In this case, the schedule involves the use of the classified directory assistant 14 and the web assistant 15.

At step S4.5, the execution module 21 instructs the assistants 14, 15 to carry out tasks to obtain data relevant to the holiday. The directory assistant 14 is instructed to obtain data from travel agents listed in classified directories who offer deals relating to the desired holiday destination. The web assistant 15 is similarly instructed to surf the web to find corresponding information on the internet. Thus, the names and telephone numbers and possibly other information is obtained concerning travel agents who offer an appropriate service.

At step S4.6, the monitoring module 22 receives the data obtained by the directory and web assistants 14, 15. At step S4.7, the execution module 21 sends the data to the diary entry slot in the diary operated by diary assistant 11. Thus, at the time dictated by the diary entry, the user is presented with suitable data to enable telephone calls to be made to travel agents in order to arrange the holiday.

Thus, the co-ordinator 18 lifts the burden of many of the steps of arranging a holiday from the user by making reference to a previously defined plan and carrying out a schedule of tasks in accordance with the plan.

It will be understood that a number of different plans can be held in the plan library 20 to execute different tasks which may involve other ones of the assistants shown in Figure 2. A scheduler 19 allows the plan to be scheduled at different times so that the outcome of one task performed by one of the assistants can be considered when performing another task carded out subsequently by another one of the assistants.

When the task is completed, and the execution module sends the returned data to the diary entry (step S4.7). It may be that the diary indicates that the user is uninteruptable. This will be explained in more detail hereinafter. If this occurs, the co-ordinator 18 carries out a routine by which the data derived by carrying out the task is temporarily held and then rescheduled for display to the user at a different time.

### Diary Assistant

The diary assistant 11 uses fuzzy reasoning techniques to assist the user in making a diary entry so that the user does not have to specifically select a particular diary slot.

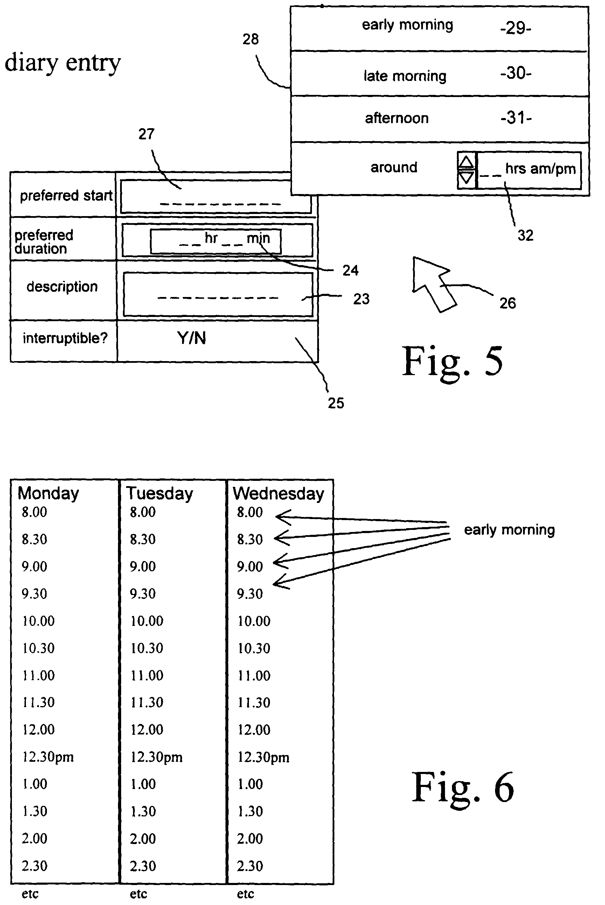

When the user selects the diary through the multi-modal interface 12, a diary entry screen is displayed on the display 2, as shown in Figure 5. The diary entry procedure can be operated in a local mode i.e. for one day only or in a global mode i.e. all days. A local mode entry will now be described.

Referring to Figure 6, each day is in this example, broken up into contiguous diary slots of a half hour duration. As shown in Figure 5, the user is prompted to specify details of the diary entry i.e. narrative, in window 23. This is entered via the multi-modal interface 12 e.g. by using the keyboard. Also, the preferred duration of the meeting is entered at window 24. The user is also prompted to indicate in window 25 whether the event described in window 23 is interruptable or not i.e. whether the user does not want to be disturbed during the duration of the diary entry, e.g. during an important meeting.

Mouse cursor 26 can be used to enter a preferred start time for the diary entry in window 27.

When the cursor 26 is moved onto window 27, a further window 28 is displayed, allowing the user to choose one of a number of fuzzy definitions for the start time of the meeting. In this example, the user can operate the mouse to choose early morning 29, late morning 30, afternoon 31 or, can enter a time in window 32 so that the diary assistant can seek a diary slot generally around the entered time. Alternatively, the fuzzy definitions of the start time can be typed directly into the window 27 using the keyboard.

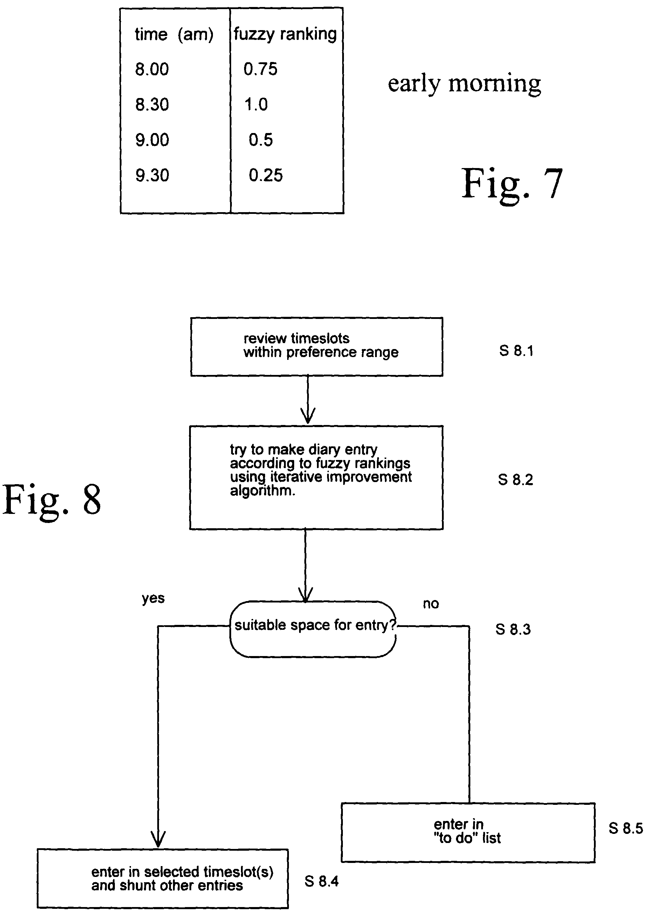

In the following description, it will be assumed that the "early morning" window 29 has been selected and that the local mode is operative for Wednesday as shown in Figure 6. The early morning window 29 has associated fuzzy parameters shown in Figure 7. For the early morning selection, the diary assistant assumes that time slots from 8.00 am to 9.30 are within range and each of them is given a fuzzy ranking between 0 and 1. The time slot of 8.30 am is preferred and is given fuzzy ranking = 1. The time slot of 8.00 am is next preferred and given a ranking of 0.75. This is followed in preference by the 9.00 am time slot which is given a ranking of 0.5 and the time slot of 9.30 am is least preferred, with a ranking of 0.25.

It will be understood that the fuzzy rankings shown in Figure 7 are only one example of different values that can be used. Generally the values may be defined by a function which has a peak at the most desirable time and tails which decrease on either side, towards zero. For example a triangular function could be used, with a peak at the most preferred time and straight line slopes to zero on either side, with a total timewidth of two hours. Alternatively bell peak functions could be used to define the fuzzy rankings.

Certain time slots may already be filled with previous diary entries and so the diary assistant seeks to find the most preferred free entry according to the fuzzy rankings. This will now be described with reference to Figure 8.

At step S8.1, the assistant 11 reviews the time slots within the preference range set by the table shown in Figure 7. It will be understood that some of the time slots may have already been taken by previous diary entries. Then, at step S8.2, the assistant 11 attempts to make the diary entry according to the fuzzy rankings of Figure 7. If suitable time slots are available, this merely involves selecting the available time slots according to the order of preference shown in Figure 7. However, if sufficient time slots are not available, the assistant 11 makes use of an iterative improvement algorithm in order to review the previously entered diary items and their fuzzy rankings in order to determine whether they can be shunted, without changing their order so as to open a sufficient span of time slot to allow the new diary entry to be inserted. A suitable iterative improvement algorithm is described in "Artificial Intelligence - A Modern Approach" by S. Russell and P. Norvig, Prentice Hall, USA.

At step S8.3, the result of running the algorithm is reviewed. If successful, the new diary entry is entered into appropriate time slots at step S8.4 and the previous diary entries are, if necessary shunted, without changing their order to accommodate the new diary entry. Alternatively, if the outcome of running the algorithm at step S8.2 is unsuccessful, the diary entry is not made and is instead entered on a "to do" list at step S8.5.

It will be understood that the late morning and afternoon windows 30, 31 have associated fuzzy ranking tables that correspond to the table of Figure 7, but for the late morning and afternoon respectively. As regards the "around" window 32, a fuzzy ranking table is provided which defines fuzzy rankings in a time window around the entered time. Thus, the time slot which includes the entered time has the highest fuzzy ranking and time slots further away from this have progressively lower fuzzy rankings.

The previously described example constitutes a local mode of operation of the diary assistant, in which an entry is made on a particular day. However, in a global mode, the fuzzy parameters may be used to find an appropriate slot in any available day. Further search strategies can be devised. For example, a particular date range may be selected and other suitable restraints may be used as appropriate. Thus, the diary assistant facilitates the making of a diary without the specific need to look for a particular vacant diary slot.

### E-mail Assistant

E-mail has greatly facilitated communication interchange between users connected in a network. However, e-mails tend to proliferate in number and a user at a particular workstation can be inundated with e-mails which take a significant amount of time to open and read. Some e-mails are of crucial importance whereas others are of only marginal interest. It would therefore be helpful to filter e-mails according to priority. In some conventional systems, e-mails are given a priority by the sender but the user can only determine the actual priority by reading the e-mail itself. The e-mail assistant 16 provides a solution to this problem.

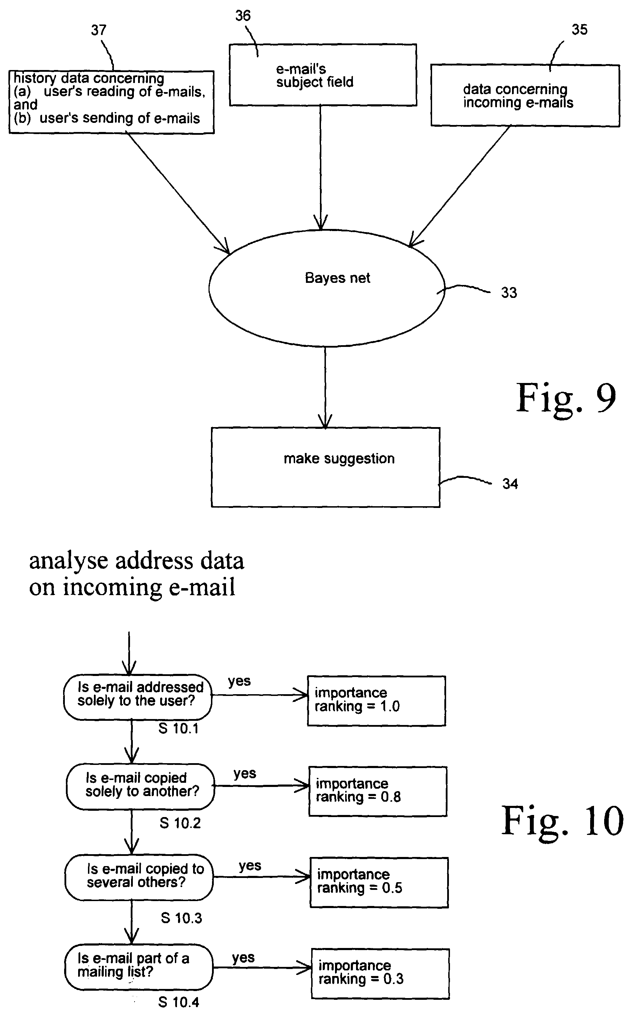

Referring to Figure 9, the e-mail assistant makes use of a Baysian net 33 in order to make a suggestion 34 as to whether the e-mail is of relatively high or low importance and thus whether it should be read immediately or can be left until a later time. As known in the art, a Baysian net considers the causal relation of history data in order to modify the a-priori probability of the occurrence of an event. A discussion of Baysian nets is given by S. Russell and P. Norvig, ***supra.***

The e-mail assistant provides inputs to the Baysian net 33 that comprise data 35 concerning the address of incoming e-mails, data 36 concerning the importance to the user of the subject matter of the incoming e-mail, as signified by its title, and history data 37 concerning the user's previous reading of e-mails for a particular sender and the user's previous sending of e-mails to the sender of the incoming e-mail.

The derivation of data 35 concerning incoming e-mails will now be discussed in more detail with reference to Figure 10. As known in the art, e-mails can be addressed to an individual address, can be copied to one or more other people and can also be sent using a predefined mailing list, for example to all engineers in a particular company or to a group of customers. In this example, it is assumed that an e-mail addressed solely the user is of high importance. It is to assumed to be of lesser importance if copied to another person. If copied to more than one person, it is assumed to be of lesser importance still. If sent via a mailing list, it is assumed to be of even lower importance.

Thus, referring to Figure 10, at step S10.1, the address information for the incoming e-mail is analysed to determine whether the e-mail is addressed solely to the user. If so, it is given a high importance ranking. A ranking factor is defined having a value range between 1 for high importance and 0 for no importance. In this example, the ranking is set equal to 1 when the incoming e-mail is directed to the user alone.

At step S10.2, the address information is analysed to determine whether the e-mail is copied solely to another. If so, the e-mail is given a importance ranking = 0.8. At step S10.3, a determination is made whether the e-mail is copied to several others. If so, the e-mail is ranked with an importance of 0.5. At step S10.4, it is determined whether the e-mail is pan of a mailing list. If so, it importance ranking is set to be 0.3 i.e. low importance.

It will be understood that the specific rankings shown in Figure 10 are examples and that in practice, the importance attributed to each particular category of e-mail by the individual user will change with time. The rankings can be thus learnt over a period of time by monitoring the user's behaviour in regard to the reading of incoming e-mails.

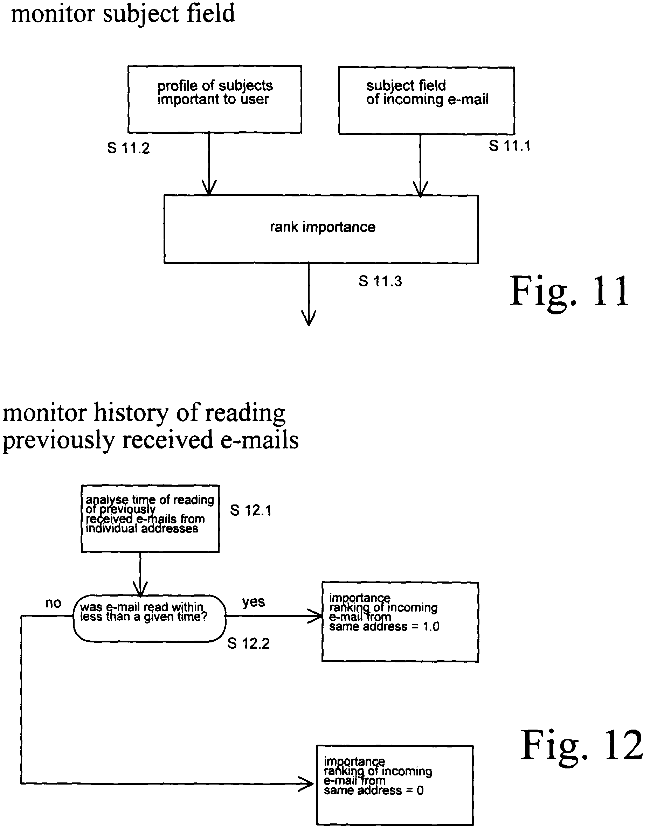

The data 36 concerning the subject field of incoming e-mails will now be discussed in relation to Figure 11. As well known in the art, e-mails have as a header, information concerning the sender, the recipient and the subject of the e-mail. As shown in Figure 11, at step S11.1, the subject of the incoming e-mail is detected from its header. At step S11.2, a profile of important subjects is developed, pertinent to the individual user. For example, if a user has recently sent a number of e-mails using the same title entered into the subject field, the title of the incoming e-mail is deemed to be important to the user. It will be understood that fuzzy recognition techniques can be used to identify different presentations of the same topic in the subject field. At step S11.3, the importance of the incoming e-mail is ranked by making a comparison between the profile developed at step S11.2 and the actual subject of the incoming e-mail identified at step S11.1.

Derivation of the history data 37 from previous e-mails will now be described. It will be understood that in a conventional manner, the e-mail assistant keeps a log of e-mails that have been sent and received with appropriate dates and times. Thus, the time of receipt and the time of reading of a particular previously received e-mail can be analysed in order to determine the time taken by the user to read a particular e-mail after receipt. If the e-mail is read quickly after receipt, this indicates that the user considers e-mails from a particular sender to be important whereas if the user has in the past taken a long time to read an e-mail from a particular sender after receipt, this indicates that the user considers e-mails from a particular sender to be of low importance.

Thus, referring to Figure 12, at step S12.1, an analysis is carried out of the time previously taken to read e-mails from individual addresses i.e. individual senders. Then, at step S12.2, when an e-mail from a particular sender is received, a decision is made concerning the time taken to read e-mails from the sender, in the past. If e-mails previously were read within less than a given time, i.e. deemed to be important, the incoming e-mail is given a high ranking = 1. However, if previous e-mails from the sender were previously read in greater than the given time, the incoming e-mail is given a low ranking = 0.

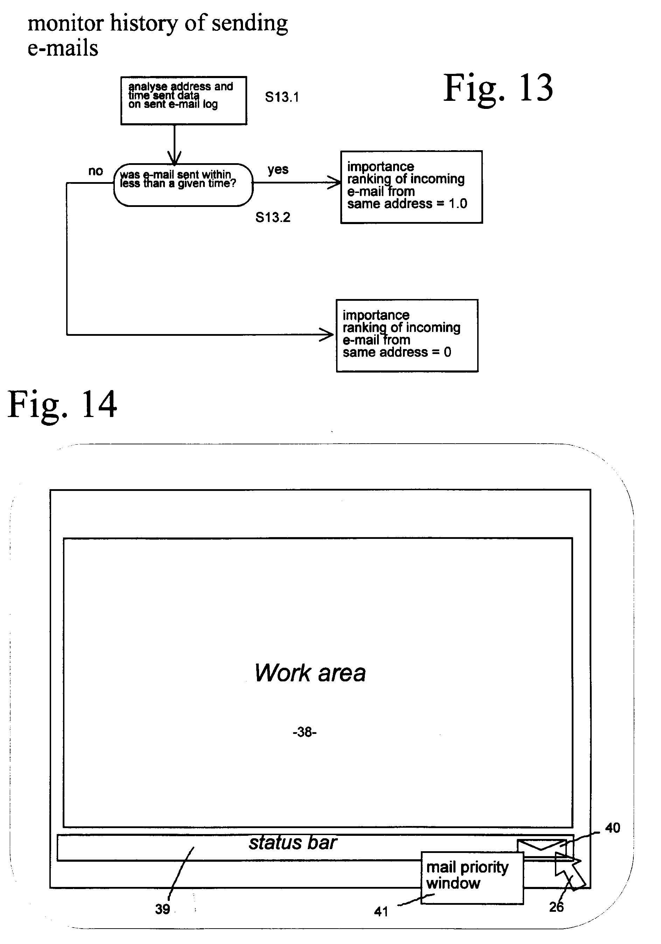

This history data 37 also includes information concerning the history of sending e-mails by the user (operator of the workstation shown in Figure 1) to the sender of the incoming e-mail. This is shown in Figure 13. If an e-mail was recently sent by the user to the sender of the current, incoming e-mail i.e. the user is expecting a reply, the incoming e-mail is given a high ranking but otherwise a low ranking. Thus, at step S13.1, the address and time sent data on the e-mail log is analysed in order to determine when the user last sent an e-mail to the sender of the incoming e-mail. If an e-mail was sent within less than a given time, the incoming e-mail is, at step S13.2, given a high ranking = 1 whereas if an e-mail was not sent within the given time, the incoming e-mail is given a low ranking = 0.

Referring back to Figure 9, the various data inputs to the Baysian net 33 are processed to provide the suggestion 34 concerning the relative importance of the incoming e-mail. It will be understood that not all of the data inputs are necessarily needed for the net 33 to make a suggestion 34. An example of categories of suggestion 34 are set out in the following table:

**Table 1**

| Suggestion | Message |
|---|---|
| High priority | Suggest read mail now |
| Medium priority | Suggest read mail soon |
| Low priority | Suggest read mail later |

Figure 14 illustrates how the suggestion message 34 may be displayed to the user. The screen of display 2 (Figure 1) is shown with a work area 38 on which data processing is carried out. The status bar 39 is shown below the work area. Thus, the user may be operating a wordprocessor to prepare a document. When an incoming e-mail is received, a mail icon 40 is displayed on the status bar 39. This indicates the arrival of the e-mail but not its content. Thus, the user must decide whether to stop word processing and open the newly arrived e-mail or whether to continue word processing. If the e-mail is of peripheral importance, it would be better to continue with the word-processing rather than break concentration. In accordance with the invention, the user moves the mouse cursor 26 onto the mail icon 40 which results in a mail priority window 41 being displayed. The window 41 contains a message selected according to Table 1 above, depending on the suggestion made by the Baysian net 33 shown in Figure 9.

Thus, if the incoming mail is suggested to be of low priority, the user is immediately informed of this fact and can continue word-processing. However, if the e-mail is suggested to be of high priority, the user can stop word-processing and open the newly received e-mail message. The message in window 41 is a suggestion only and thus can be overridden by the user if deemed appropriate.

### Telephone assistant

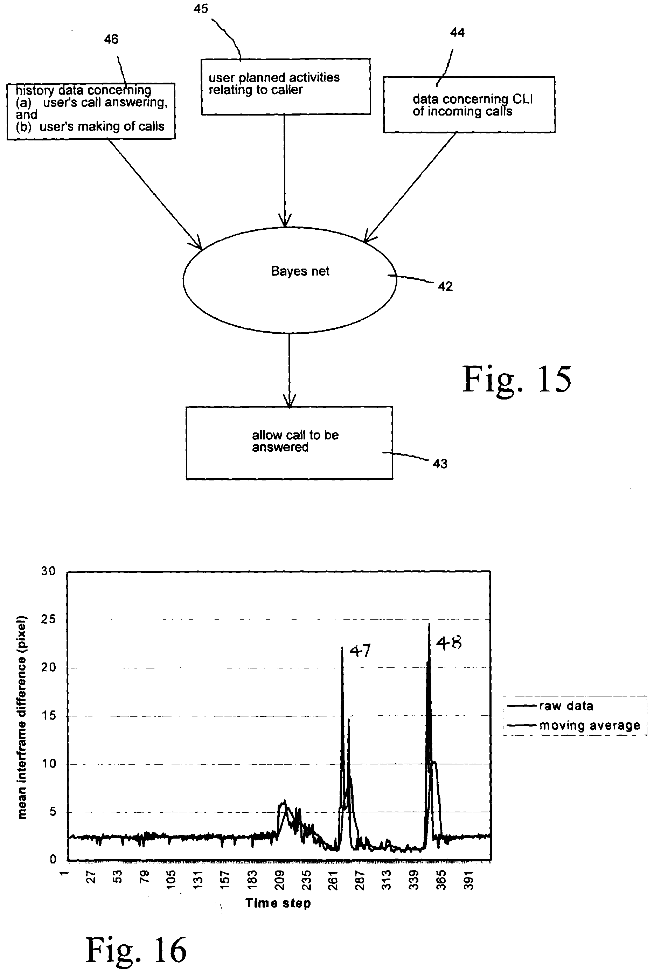

Referring to Figure 15, a Baysian net 42 can be used to restrict answering of incoming telephone calls. The net 42 is similar to the net 33 described with reference to Figure 9. Data is fed into the net 42 and an output 43 is provided to control answering of incoming telephone calls. The call line identifier (CLI) of incoming calls is fed as data 44 to the Baysian net 42.

Also, the Baysian net 42 receives data 45 from the diary assistant 11, relating to diary entries indicating that the user has planned certain activities relating to the caller i.e. the initiator of the incoming call. For example, the diary may contain a diary indicating that a call is expected, in which case the net 42 takes this into account when prioritising the incoming call. Also, the diary may indicate that at a particular time, the user is un-interruptable, in which case call answering will be barred.

Furthermore, data 46 concerning the users prior history of answering calls from a particular CLI and the making of calls by the user to the caller is analysed, and given a ranking, in a similar manner to the way in which e-mails are analysed, as described relation to Figures 12 and 13.

Thus, the telephone assistant can instruct the interface 9 shown in Figure 1 to inhibit the ringing of a telephone so as to divert an incoming call to a messaging service, so as not to interrupt the user unless the incoming call is analysed to be of relatively high importance. Thus, relatively high importance calls are announced to the user and relatively low importance calls are not announced depending upon the analysis carried out by the Baysian net 42.

### Multi-modal interface

As shown in Figure 1, the workstation includes a gaze tracker 8 which monitors movement of eyeball of the user. Thus, the direction of gaze of the user can be determined in order to allow the user to look at a particular part of the display 2 in order to control data processing operations by eye movement. One example of a gaze tracker is described in US Patent 4 836 670. Conventional gaze trackers consist of a TV camera directed towards the eye of the user together with pattern recognition software running on the computer, which analyses the imagine developed by the camera in order to determine the direction of view of the user. This is correlated with the configuration of the display so as to determine which window or region of the display is being viewed the by user.

With a gaze tracker, it is difficult to determine precisely when a user is present at the workstation. Figure 16 is a graph of the amplitude of signals detected by a gaze tracker's camera as a user firstly approaches the workstation, sits next to it ready for use and then leaves the vicinity of the workstation. The approach of the user produces an initial upward step in the output of the gaze tracker and then as the user becomes positioned next to the workstation ready for use, a pulse 47 is produced. Thereafter, the output settles to a relatively steady level. When the user leaves, pulse 48 is produced in the output. The level that occurs whilst the user is present, using the workstation is much the same as when no user is present at the workstation. It is therefore difficult to determine from the output whether the user is present or absent from the workstation.

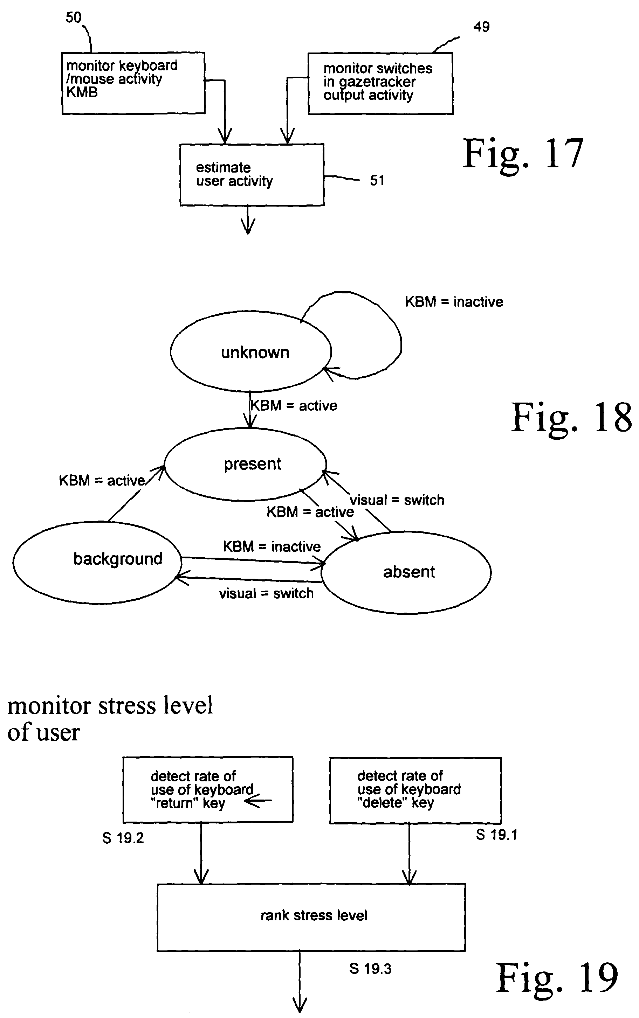

The multi-modal interface 12 includes intelligence in order to estimate the presence or absence of the user from the workstation. Referring to Figure 17, data input 49 comprises data concerning the discontinuities or switches 47, 48 that occur when a user enters and leaves the vicinity of the workstation. Data input 50 concerns activity of the keyboard 1 and mouse 3. When the keyboard or mouse is found to be active, a flag KMB is set = active and when no activity occurs within a predetermined time, the flag is set to KMB = inactive. The relationship of the status of flag KMB and switches in the camera output activity is shown in Figure 18. Estimator 51 shown in Figure 17 thus estimates the user activity on the basis of the logical diagram shown in Figure 18. In this way, it is possible to estimate whether the user is present, absent, or merely present but not active at the workstation.

With this information, data from the camera of the gaze tracker 8 can be appropriately processed on the basis of a realistic estimation of whether the user is actually present at the workstation thereby improving processing efficiency.

The multi-modal interface 12 can also provide data to any one of the assistants shown in Figure 2, concerning the level of stress exhibited by the user. Referring to Figure 19, the way in which the user operates the keyboard is analysed to detect at step S19.1 the rate at which the user operates the "delete" key. Usage of the delete key at a relatively high rate indicates that the user is making many mistakes which in turn indicates that the user is under high levels of stress. Similarly, heavy use of the return key ← indicates a high error rate and hence high stress. This is monitored at step S19.2. At step S19.3, the data from steps S19.1 and S19.2 is analysed in order to rank the stress level of the user. It will be understood that the system can monitor the usage of the delete key and the return key under all conditions and thus determine an average rate for the user so that when the usage rate exceeds the average significantly, a condition of high stress is indicated. Thus, a stress ranking between 1 = high stress and 0 = low stress can be provided by the multi-modal interface 12. Other keys such as control keys can also be monitored to indicate stress.

The stress ranking may for example be fed to the co-ordinator 18 shown in Figure 2. Thus, if the user is manifesting high levels of stress, the co-ordinator may inhibit or modify plans that are currently being carried out in order to reduce the amount of information supplied to the user in order to provide a relatively calm working environment. However, if the user is sitting at the workstation and does not demonstrate high stress i.e. bored due to lack of work, the co-ordinator 18 may be configured to only provide a very low level of filtering of incoming e-mails and telephone calls in order to keep the user occupied.

Many modifications and variations fall within the scope of the invention, which is intended to cover all permutations and combinations of the individual modes of operation of the various assistants described herein.

## Claims

1. A communications organiser for communications made over a network, comprising means for monitoring communications received by a user together with details of the sender, learning means to learn the user's preference for communications from particular senders, and means for indicating to the user a priority for incoming communications on the basis of the learnt preferences.

2. An organiser according to claim 1 wherein the communications comprise e-mails and the learning means is operable to suggest to the user a priority for reading incoming unread messages.

3. An organiser according to claim 1 or 2 wherein the learning means includes a Bayes net.

4. An organiser according to any preceding claim wherein the learning means is responsive to the subject matter of the incoming communication.

5. An organiser according to claim 4 including means for monitoring keyboard operation error rate to determine the stress level measurement.

6. An organiser according to any preceding claim wherein the communications comprise telephone calls and the learning means is operable to permit announcement of an incoming call in dependence on said priority.

7. An organiser according to any preceding claim wherein the learning means is responsive to history data concerning the user's making of communications to the sender.

8. An organiser according to any preceding claim wherein the learning means is responsive to history data concerning the user's receiving of communications from the sender.

9. A computer program product comprising a storage medium in which is stored computer readable code corresponding to an assistant device according to any preceding claim.
